# EUROPÄISCHE PATENTSCHRIFT

(11) **EP 3 769 909 B1**
(45) Veröffentlichungstag und Bekanntmachung des Hinweises auf die Patenterteilung: **10.12.2025**
(21) Anmeldenummer: 19188265.3
(22) Anmeldetag: 25.07.2019
(51) Int. Cl.: B23Q 7/14

(54) **WERKSTÜCKPALETTE UND BEARBEITUNGSSYSTEM**
WORKPIECE PALLET AND MACHINING SYSTEM
PALETTE DE PIÈCES ET SYSTÈME D'USINAGE

(43) Veröffentlichungstag der Anmeldung: 27.01.2021
(73) Patentinhaber: Maschinenfabrik Berthold Hermle AG, 78559 Gosheim (DE)
(72) Erfinder: Gruler, Stefan, 78628 Rottweil (DE); Mattes, Wilfried, 78570 Mühlheim (DE); Bernhard, Franz-Xaver, 78549 Spaichingen (DE)
(74) Vertreter: Patentanwälte Magenbauer & Kollegen Partnerschaft mbB

(56) Entgegenhaltungen:
- EP-A2- 0 087 719
- EP-A2- 0 614 725
- DE-A1- 102017 114 812
- FR-A1- 2 700 487

## Beschreibung

Die Erfindung betrifft eine Werkstückpalette zur Verwendung für eine additive und eine subtraktive Werkstückbearbeitung. Ferner betrifft die Erfindung ein Bearbeitungssystem, bei dem die erfindungsgemäße Werkstückpalette eingesetzt wird.

Aus der DE 10 2013 224 649 A1 ist eine Werkzeugmaschine bekannt, die eine Maschinensteuerung, einen Maschinenrahmen, einen Werkstücktisch , eine Werkzeugaufnahme, mehrere translatorische und/oder rotatorische Achsen zur Einstellung einer relativen Lage zwischen Werkstücktisch und Werkzeugaufnahme, ein Werkzeugmagazin für ein oder mehrere materialabtragende, insbesondere spanabhebende Werkzeuge, einen Werkzeugwechselmechanismus zum automatischen Verbringen von Werkzeugen zwischen Werkzeugaufnahme und Werkzeugmagazin, einen in die Werkzeugaufnahme einsetzbaren Auftragsschweißkopf umfasst und die eine Werkstücktemperiervorrichtung aufweist, die während der Werkstückherstellung beim Auftragsschweißen zwischen einen Werkstücktisch und ein Werkstück eingeschoben ist und die eine Heizung umfasst, wobei eine Isolierschicht zur thermischen Isolierung der Heizung gegen dem Werkstücktisch und gegebenenfalls auch eine Kühleinrichtung vorgesehen sein können, wobei die Heizung zur Beheizung des Werkstücks auf Temperaturen von über 250 Grad Celsius ausgelegt ist.

Die DE 10 2017 114 812 A1 offenbart eine Werkstücktransportpalette mit einer Ablagefläche, auf der ein Werkstück abgelegt wird, und mit einem Festspannmechanismus, der das Werkstück festspannt, wobei der Festspannmechanismus eine auf- und zumachbare erste und zweite Klaue, ein Vorspannelement, das die erste Klaue und die zweite Klaue in die Schließrichtung vorspannt, und ein Bewegungsbeschränkungselement, das dann, wenn die erste Klaue und die zweite Klaue geöffnet sind, lösbar mit der ersten Klaue und der zweiten Klaue eingreift, aufweist. Die FR 2 700 487 A1 offenbart eine Palette zum Transportieren von Teilen, mit einer Trägerplatte, die eine innere Saugkammer und Löcher aufweist, die auf einer oberen Fläche der Trägerplatte ausgebildet sind und mit der inneren Kammer in Verbindung stehen. Die Palette umfasst austauschbare und abnehmbare Teile, die in die Löcher eingesetzt werden können. Diese Teile umfassen Vorspannsauger, um das Greifen eines Teils auf der Oberseite der Platte zu gewährleisten. Ventile verschließen die Löcher, die nicht von den Vorspannsaugern und den Positionierungsteilen besetzt sind.

Die EP 0 087 719 A2 offenbart eine kombinierte Werkzeugmaschine, bestehend aus einer ersten Werkzeugmaschine mit einem Drehtisch und einem vertikal und horizontal beweglichen spanenden Werkzeug, im vorderen Teil der kombinierten Werkzeugmaschine und einer zweiten Werkzeugmaschine im hinteren Teil der kombinierten Werkzeugmaschine sowie einem Paar vertikaler Ständer zwischen der ersten und der zweiten Werkzeugmaschine, wobei die vertikalen Ständer mittels einer endseitig mit den vertikalen Ständern verbundenen Strebe in vorbestimmtem Abstand zueinander angeordnet sind und wobei Supporte der ersten und zweiten Werkzeugmaschine tragende Querbalken gleitend an gegenüberliegenden Flächen der vertikalen Ständer befestigt sind, einer Paletten-Transfereinrichtung zum Transportieren einer Folge von Paletten mit darauf angeordneten Werkstücken zwischen der ersten und der zweiten Werkzeugmaschine und zwischen den vertikalen Ständern , wobei die Paletten-Transfereinrichtung einen fest mit der Strebe verbundenen Zwischentisch besitzt, sowie horizontal zwischen dem Zwischentisch und Innenflächen der vertikalen Ständer angeordnete, entlang der Achse der kombinierten Werkzeugmaschine bewegliche Betätigungsstangen, an den vorderen Ende der Betätigungsstangen angeordnete, drehbare Kupplungshaken , die mit beiderseits der Paletten befestigten Muffenelementen in Eingriff und außer Eingriff gebracht werden können, sowie Antriebsmittel zum Vorschieben und Zurückziehen der Betätigungsstangen, wobei der Eingriff zwischen den Kupplungshaken und den Muffenelementen an der Palette und die nachfolgende Rückzugsbewegung der Betätigungsstangen den Transport der Palette mit dem Werkstück von dem Drehtisch der ersten Werkzeugmaschine zum Rundschalttisch der zweiten Werkzeugmaschine über den Zwischentisch bewirken, wobei die Oberflächen des Drehtisches, des Zwischentisches und des Rundschalttisches sich im wesentlichen auf gleicher Höhe befinden.

Die EP 0 614 725 A2 offenbart eine Einrichtung zum positionsdefinierten Aufspannen eines Werkstücks am Arbeitsplatz einer Bearbeitungsmaschine, mit einem am Arbeitsplatz der Bearbeitungsmaschine zu fixierenden Untersatz und einem auf den Untersatz aufsetzbaren und daran festspannbaren Werkstückträger, ferner mit Richtelementen am Untersatz und am Werkstückträger, welche paarweise zusammenarbeiten und den Werkstückträger in drei zueinander senkrechten Koordinatenachsen und winkelgerecht auf den Untersatz ausrichten, und mit einer Spannvorrichtung, deren Spannkraft den Werkzeugträger in der durch die Richtelemente festgelegten Position am Untersatz festhält, wobei als Richtelementepaare für die Festlegung der Position in einer zur Wirkungslinie der Spannkraft parallelen Koordinatenachse einander gegenüberstehende Anschlagflächen am Untersatz und am Werkstückträger vorhanden sind, während für die Festlegung der Position in den beiden anderen Koordinatenachsen für jede Koordinatenachse separat zwei lineare Richtelementepaare vorgesehen sind, welche je ein keilförmiges Zentrierlineal und ein Gegenstück mit einem dazu passenden Zentrierschlitz aufweisen, und wobei die Spannvorrichtung mehrere Spannorgane umfasst, welche je einen am Werkstückträger angeordneten Spannzapfen und ein am Untersatz angeordnetes Spannfutter aufweisen, dadurch gekennzeichnet, dass der Werkstückträger an der im aufgespannten Zustand dem Untersatz zugewandten Seite eine durchgehend ebene Oberfläche aufweist, welche bereichsweise die diesseitigen Anschlagflächen bildet und an welcher die diesseitigen linearen Richtelemente für die Festlegung der Koordinatenachsen sowie die Spannzapfen der Spannorgane befestigt sind.

Die Aufgabe der Erfindung besteht darin, eine Werkstückpalette und ein Bearbeitungssystem bereitzustellen, mit denen ein verbesserter Arbeitsablauf bei der Durchführung von kombinierten Auftragvorgängen (additive Werkstückbearbeitung) und Abtragvorgängen (subtraktive Werkstückbearbeitung) erzielt werden kann.

Die Aufgabe der Erfindung wird für eine Werkstückpalette der eingangs genannten Art mit den Merkmalen des Anspruchs 1 gelöst. Hierbei umfasst die Werkstückpalette eine Einspannplatte, die eine erste Schnittstelle umfasst, die zur formschlüssigen Festlegung an einem Bearbeitungstisch einer Bearbeitungsmaschine ausgebildet ist, und eine Aufnahmeplatte zur Festlegung eines Werkstücks, die eine zweite Schnittstelle zur Festlegung eines Werkstücks umfasst, wobei die Einspannplatte und die Aufnahmeplatte beabstandet zueinander angeordnet sind und wobei in einem Verbindungsspalt zwischen einer Oberseite der Einspannplatte und einer Unterseite der Aufnahmeplatte ein Tragsteg angeordnet ist, der mit der Oberseite der Einspannplatte und mit der Unterseite der Aufnahmeplatte verbunden ist, wobei der Tragsteg in einer parallel zur Unterseite der Aufnahmeplatte ausgerichteten Querschnittsebene eine Querschnittsfläche aufweist, die weniger als 15 Prozent, bevorzugt weniger als 10 Prozent, besonders bevorzugt weniger als 5 Prozent, insbesondere weniger als 1 Prozent, einer Fläche der Unterseite der Aufnahmeplatte beträgt, wobei der Aufnahmeplatte wenigstens eine Heizeinrichtung zugeordnet ist, die für eine Temperierung der Aufnahmeplatte ausgebildet ist.

Vorzugsweise ist vorgesehen, dass die Einspannplatte, die zur Festlegung der Werkstückpalette an einem Bearbeitungstisch einer Bearbeitungsmaschine ausgebildet ist, zumindest im Wesentlichen als Planparallelplatte ausgebildet ist. Bei einer Gestaltung der Einspannplatte als Planparallelplatte ist davon auszugehen, dass die beiden größten Oberflächen der Einspannplatte jeweils in Ebenen liegen, die parallel zueinander ausgerichtet sind, wobei die beiden größten Oberflächen nicht notwendigerweise vollständig eben ausgebildet sein müssen. Bei einer solchen Gestaltung der Einspannplatte liegt eine der Aufnahmeplatte abgewandte Unterseite der Einspannplatte auf der typischerweise eben ausgebildeten Oberfläche des Bearbeitungstischs flächig auf und kann damit eine vorteilhafte Kraftübertragung zwischen der Werkstückpalette und dem Bearbeitungstisch gewährleisten. Ferner ist die Oberseite der Einspannplatte der Aufnahmeplatte zugewandt und ist mit dem Tragsteg, insbesondere einstückig verbunden. Eine erste Materialdicke der Einspannplatte entspricht dem Abstand der beiden größten Oberflächen, also der Unterseite und der Oberseite, der Einspannplatte.

Ferner kann vorgesehen sein, dass die Aufnahmeplatte, deren der Einspannplatte abgewandte Oberseite zur Aufnahme eines Werkstücks genutzt werden kann, zumindest im Wesentlichen als Planparallelplatte ausgebildet ist, wobei das Werkstück an der Oberseite beispielsweise direkt angeschraubt werden kann oder mit Hilfe von Spannelementen wie beispielsweise manuell zu betätigenden Spannpratzen an der Oberfläche der Aufnahmeplatte festgelegt werden kann. Ferner ist die Unterseite der Aufnahmeplatte der Einspannplatte zugewandt und ist mit dem Tragsteg, insbesondere einstückig, verbunden. Eine zweite Materialdicke der Aufnahmeplatte entspricht dem Abstand der beiden größten Oberflächen, also der Unterseite und der Oberseite, der Aufnahmeplatte.

Um einen günstigen Kompromiss zwischen einer belastbaren mechanischen Kopplung der Einspannplatte und der Aufnahmeplatte und einer thermischen Entkopplung der Einspannplatte von der Aufnahmeplatte zu erreichen, sind die Einspannplatte und die Aufnahmeplatte beabstandet zueinander angeordnet und mit einem Tragsteg miteinander verbunden. Der Tragsteg ist in einem Verbindungsspalt zwischen der Einspannplatte und der Aufnahmeplatte angeordnet und mit einer der Aufnahmeplatte zugewandten Oberseite der Einspannplatte sowie mit einer der Einspannplatte zugewandten Unterseite der Aufnahmeplatte mechanisch verbunden. Vorzugsweise ist vorgesehen, dass größte Oberflächen des Tragstegs quer zur Oberseite der Einspannplate und quer zur Unterseite der Aufnahmeplatte ausgerichtet sind. Ferner ist vorzugsweise vorgesehen, dass eine Querschnittsfläche des Tragstegs in einer Querschnittsebene, die parallel zur Unterseite der Aufnahmeplatte ausgerichtet ist, weniger als 15 Prozent, bevorzugt weniger als 10 Prozent, besonders bevorzugt weniger als 5 Prozent, insbesondere weniger als 1 Prozent, der Fläche der Unterseite der Aufnahmeplatte beträgt.

Bei der Fläche der Unterseite der Aufnahmeplatte handelt es sich beispielsweise um die Gesamtfläche der Aufnahmeplatte, die der Einspannplatte zugewandt ist. Bevorzugt handelt es sich bei der Fläche der Unterseite der Aufnahmeplatte um diejenige Fläche, die mittels einer Projektion der Unterseite der Aufnahmeplatte auf die Querschnittsebene ermittelt werden kann, in der auch die Fläche des Tragstegs ermittelt wird. Die Bestimmung der Fläche der Unterseite der Aufnahmeplatte durch Projektion der Fläche der Unterseite der Aufnahmeplatte in die Querschnittsebene kann insbesondere dann angewandt werden, wenn die Fläche der Unterseite der Aufnahmeplatte uneben ausgebildet ist, beispielsweise mehrere in unterschiedlichen Ebenen angeordnete Flächenabschnitte umfasst.

Durch die vorstehend beschriebene Gestaltung des Tragstegs wird eine geringe thermische Kopplung zwischen der Einspannplatte und der Aufnahmeplatte sichergestellt, so dass eine Erwärmung der Aufnahmeplatte und des daran aufgenommenen Werkstücks nur in einem geringen Umfang zu einer Erwärmung der Einspannplatte führt. Hierdurch wird erreicht, dass die Werkstückpalette auch bei erwärmter Aufnahmeplatte keine Lage-Toleranzen gegenüber dem Bearbeitungstisch aufweist, die eine präzise Bearbeitung des auf der Werkstückpalette aufgenommenen Werkstücks in Frage stellen würden.

Ferner kann vorzugsweise vorgesehen sein, dass ein Abstand zwischen der Oberseite der Einspannplatte und der Unterseite der Aufnahmeplatte, der auch Spaltweite des Verbindungsspalts zwischen der Einspannplatte und der Aufnahmeplatte bezeichnet werden kann, zumindest der ersten Materialdicke der Einspannplatte und/oder der zweiten Materialdicke der Aufnahmeplatte entspricht. Besonders bevorzugt beträgt die Spaltweite des Verbindungsspalts das 1,5-fache bis 3-fache der ersten Materialdicke und/oder der zweiten Materialdicke.

Zweckmäßig ist es, wenn die Einspannplatte aus einem ersten Metallwerkstoff mit einem ersten Wärmeausdehnungskoeffizienten hergestellt ist und wenn die Aufnahmeplatte aus einem zweiten Metallwerkstoff mit einem zweiten Wärmeausdehnungskoeffizienten hergestellt ist, wobei der erste Wärmeausdehnungskoeffizient größer als der zweite Wärmeausdehnungskoeffizient ist und wobei der zweite Wärmeausdehnungskoeffizient weniger als 16/1000000 [1/K] beträgt. Durch diese Maßnahme soll ein Verzug der Werkstückpalette minimiert werden, der zu einer Formabweichung für die Werkstückpalette und zu einer aus der Formabweichung resultierenden Lageabweichung für das auf der Werkstückpalette aufgenommene Werkstück führen könnte. Hierbei ist vorgesehen, dass die Aufnahmeplatte für die Bearbeitung des daran festgelegten Werkstücks auf Temperaturen in einem Intervall von 300 Grad Celsius bis 550 Grad Celsius, vorzugsweise auf eine Temperatur von 400 Grad Celsius, erwärmt wird. Durch die Beabstandung der Einspannplatte von der Aufnahmeplatte, die durch die mechanische Verbindung und die weitgehende thermische Entkopplung mittels des Tragstegs verwirklicht wird, erwärmt sich die Einspannplatte hierbei deutlich geringer, beispielsweise auf Temperaturen in einem Intervall von 50 Grad Celsius bis 150 Grad Celsius.

Bei einer Auswahl des gleichen Metallmaterials für die Einspannplatte und die Aufnahmeplatte würden innerhalb der Werkstückpalette aufgrund der großen Temperaturunterschiede zwischen Einspannplatte und Aufnahmeplatte erhebliche Unterschiede in den Wärmeausdehnungen der Einspannplatte und der Aufnahmeplatte auftreten, die zu deutlichen inneren Spannungen in der Einspannplatte und der Aufnahmeplatte, insbesondere jedoch im Tragsteg zu erheblichen inneren Spannungen und daraus resultierenden elastischen oder gegebenenfalls plastischen Deformationen der Werkstückpalette führt.

Werden hingegen für die Einspannplatte und die Aufnahmeplatte unterschiedliche Metallmaterialien gewählt, wobei der erste Wärmeausdehnungskoeffizient der Einspannplatte größer als der zweite Wärmeausdehnungskoeffizient der Aufnahmeplatte ist, so ergeben sich bei geeigneter Materialauswahl trotz der Temperaturdifferenz von ca. 200 Grad Celsius bis 400 Grad Celsius zwischen der Einspannplatte und der Aufnahmeplatte lediglich geringe inneren Spannungen in der Einspannplatte, in der Aufnahmeplatte und im Tragsteg. Hiermit kann eine unerwünschte elastische oder gegebenenfalls plastische Deformation der Werkstückpalette, insbesondere des Tragstegs, vermieden werden.

Bevorzugt ist vorgesehen, dass der Tragsteg zusammen mit der Einspannplatte und der Aufnahmeplatte wenigstens einen, insbesondere abgeschlossenen, Hohlraum begrenzt und/oder dass der Tragsteg aus einem Metallmaterial hergestellt ist, das eine spezifische Wärmeleitfähigkeit von weniger als 30 W/mK, insbesondere von weniger als 20 W/mK, und/oder einen Wärmeausdehnungskoeffizienten von weniger als 16/1000000 [1/K], insbesondere von weniger als 14/1000000 [1/K] aufweist.

Rein exemplarisch kann vorgesehen sein, dass die Einspannplatte einen Wärmeausdehnungskoeffizienten in einem Intervall zwischen 16/1000000 [1/K] und 18/1000000 [1/K] aufweist.

Vorzugsweise ist der Tragsteg derart im Verbindungsspalt zwischen der Einspannplatte und der Aufnahmeplatte angeordnet, dass er nahe zu Randbereichen der Einspannplatte und der Aufnahmeplatte verläuft. Vorzugsweise ist vorgesehen, dass die Einspannplatte und die Aufnahmeplatte in einer Querschnittsebene, die quer zu einem Abstand zwischen der Einspannplatte und der Aufnahmeplatte und parallel zu den größten Oberflächen der Einspannplatte und der Aufnahmeplatte ausgerichtet ist, jeweils zumindest im Wesentlichen den gleichen, beispielsweise kreisförmigen oder quadratischen oder rechteckigen Querschnitt aufweisen. Ferner ist vorzugsweise vorgesehen, dass sich der Tragsteg jeweils zumindest teilweise, insbesondere vollständig, längs einer umlaufenden Außenkante der Einspannplatte bzw. der Aufnahmeplatte erstreckt. Der hiermit gebildete Hohlraum, der von der Oberseite der Einspannplatte, der Unterseite der Aufnahmeplatte und der nach innen gewandten größten Oberfläche des Tragstegs gebildet wird, entspricht somit zumindest nahezu vollständig dem Verbindungsspalt. Besonders bevorzugt ist vorgesehen, dass der Hohlraum abgeschlossen ausgebildet ist, da hiermit eine Wärmeübertragung zwischen der deutlich wärmeren Aufnahmeplatte und der demgegenüber kühleren Einspannplatte in günstiger Weise kontrolliert werden kann.

Dies gilt insbesondere für den Fall, dass im Hohlraum wenigstens ein Isolationsmaterial aus der Gruppe: Gas, Flüssigkeit, Feststoff, aufgenommen ist und/oder dass der Hohlraum evakuiert ist. Vorzugsweise ist vorgesehen, dass der Hohlraum mit einem Feststoff gefüllt ist, der eine vorteilhafte thermische Isolationswirkung aufweist. Hierzu können beispielsweise Materialien wie Glasfasermatten oder Keramikfasermatten verwendet werden. Ergänzend oder alternativ kann vorgesehen werden, den Hohlraum zu evakuieren, um eine Weiterleitung von Strahlungswärme von der Aufnahmeplatte an die Einspannplatte durch Luft oder andere im Hohlraum enthaltene Gase zu minimieren.

Ferner wird die Wärmeübertragung zwischen der Aufnahmeplatte und der Einspannplatte durch eine geeignete Materialauswahl für den Tragsteg begrenzt. Vorzugsweise ist vorgesehen, dass eine spezifische Wärmeleitfähigkeit des Materials, aus dem der Tragsteg hergestellt ist, weniger als 30 W/mK, insbesondere von weniger als 20 W/mK beträgt.

Ergänzend oder alternativ kann vorgesehen sein, dass der Tragsteg aus einem Metallmaterial hergestellt ist, das einen Wärmeausdehnungskoeffizient von weniger als 16/1000000 [1/K], insbesondere von weniger als 14/1000000 [1/K] aufweist. Hierdurch werden eine geringe Wärmedehnung des Tragstegs und eine geringe Wärmeübertragung durch den Tragsteg von der Aufnahmeplatte an die Einspannplatte gewährleistet.

In weiterer Ausgestaltung der Erfindung ist vorgesehen, dass an der Einspannplatte oder an der Aufnahmeplatte oder an dem Tragsteg ein Ausgleichsventil angebracht ist, das für eine vorgebbare, fluidisch kommunizierende Verbindung zwischen dem Hohlraum und einer Umgebung der Werkstückpalette zur Begrenzung eines Differenzdrucks zwischen dem Hohlraum und der Umgebung ausgebildet ist. Ein Ausgleichsventil ist zur Vermeidung von Druckdifferenzen zwischen dem Hohlraum und einer Umgebung der Werkstückpalette vorzusehen, da ansonsten eine unerwünschte Fluidexpansion, insbesondere Gasexpansion, beim Einsatz der Werkstückpalette aufgrund der vorgesehenen Erwärmung der Aufnahmeplatte auftreten kann. Vorzugsweise ist das Ausgleichsventil derart ausgebildet, dass es sowohl bei Vorliegen eines Überdrucks im Hohlraum, der eine vorgebbare Druckdifferenz gegenüber der Umgebung aufweist, als auch bei Vorliegen eines Unterdrucks, der eine vorgebbare Druckdifferenz gegenüber der Umgebung aufweist, ein Ausströmen eines Fluids, insbesondere eines Gases, aus dem Hohlraum bzw. ein Einströmen von Umgebungsluft in den Hohlraum ermöglicht. Bei einer vereinfachten Aufbauweise ist das Ausgleichsventil als Überdruckventil gestaltet, das bei Vorliegen eines Überdrucks im Hohlraum, der eine vorgebbare Druckdifferenz gegenüber der Umgebung aufweist ein Ausströmen eines Fluids, insbesondere eines Gases, aus dem Hohlraum ermöglicht. Rein exemplarisch kann das Ausgleichsventil in diesem Fall als federvorbelastetes Rückschlagventil ausgebildet sein.

Vorteilhaft ist es, wenn der Tragsteg einstückig mit der Aufnahmeplatte ausgebildet ist und von einer der Einspannplatte zugewandten Unterseite der Aufnahmeplatte in Richtung der Einspannplatte abragt und an einer der Aufnahmeplatte zugewandten Oberseite der Einspannplatte mit Befestigungsmitteln festgelegt ist. Hiermit wird eine zuverlässige mechanische Verbindung des Tragstegs mit der Aufnahmeplatte gewährleistet. Hierbei ist zu berücksichtigen, dass die Aufnahmeplatte bei der Verwendung der Werkstückpalette auf eine Temperatur in einem Intervall von in einem Intervall von 300 Grad Celsius bis 550 Grad Celsius, vorzugsweise auf eine Temperatur von 400 Grad Celsius, erwärmt wird und dabei eine erhebliche Wärmeausdehnung auftritt. Durch die einstückige Ausgestaltung des Tragstegs mit der Aufnahmeplatte lässt sich ein homogener Kraftfluss sowie eine homogene Temperaturverteilung zwischen dem Tragsteg und der Unterseite der Aufnahmeplatte verwirklichen, wie dies beispielsweise bei einer Schraubbefestigung des Tragstegs an der Unterseite der Aufnahmeplatte nicht oder nur sehr aufwendig realisiert werden könnte. Ferner werden durch die einstückige Ausgestaltung des Tragstegs mit der Aufnahmeplatte kritische Problemstellungen, wie sie bei einer Schraubbefestigung des Tragstegs an der Unterseite der Aufnahmeplatte im Hinblick auf ein ungewolltes Lösen von Schraubverbindungen und/oder eine Überbelastung der Schraubverbindungen auftreten könnten, vermieden. Bevorzugt ist vorgesehen, dass ein der Aufnahmeplatte abgewandter Endbereich des Tragstegs an der Oberseite der Einspannplatte, die der Aufnahmeplatte zugewandt ist, an der Einspannplatte mit Befestigungsmitteln befestigt ist. Beispielsweise kann vorgesehen sein, dass dieser Endbereich des Tragstegs seitlich an einer umlaufenden Randfläche der Einspannplatte, beispielsweise mit Schraubbefestigungen, angebracht ist. Bei einer alternativen Ausgestaltung der Werkstückpalette ist vorgesehen, dass der Tragsteg sowohl mit der Aufnahmeplatte als auch mit der Einspannplatte ausgebildet ist.

Eine derartige Werkstückpalette kann insbesondere in einem generativen / additiven Werkstückbearbeitungsverfahren wie dem in der DE 10 2007 017 759 A1 beschriebenen Kaltgasspritzen hergestellt werden. Hierbei kann insbesondere auch die unterschiedliche Materialauswahl für die Einspannplatte und die Aufnahmeplatte verwirklicht werden. Ergänzend kann vorgesehen werden, dass der Tragsteg in seinem Verlauf zwischen der aus einem ersten Material hergestellten Einspannplatte und der aus einem zweiten Material hergestellten Aufnahmeplatte einen Materialgradienten aufweist, also eine Legierungsveränderung zwischen dem ersten Material und dem zweiten Material verwirklicht, um eine besonders vorteilhafte Anpassung an die Wärmeausdehnungskoeffizienten der Einspannplatte und der Aufnahmeplatte zu verwirklichen.

Vorzugsweise ist der Tragsteg als Kreisring ausgebildet, der sich längs einer Abstandsachse zwischen der Einspannplatte und der Aufnahmeplatte erstreckt und der einen Befestigungsbereich aufweist, der als in radialer Richtung, insbesondere nach außen, erstreckter Ringbund ausgebildet ist und der von den an der Oberseite der Einspannplatte angeordneten Befestigungsmitteln durchsetzt ist. Hiermit lässt sich eine homogene Spannungsverteilung im Tragsteg bei der Verwendung der Werkstückpalette erzielen. Vorzugsweise ist vorgesehen, dass eine größte Oberfläche der Einspannplatte und/oder der Aufnahmeplatte kreisrund ausgebildet ist. Ferner kann vorgesehen werden, dass der kreisringförmig ausgebildete Tragsteg koaxial zur, vorzugsweise kreiszylindrisch, ausgebildeten Einspannplatte und/oder Aufnahmeplatte angeordnet ist. Mit dem Befestigungsbereich ist eine Festlegung des, insbesondere einstückig an der Aufnahmeplatte angeformten, Tragstegs an der Oberseite der Einspannplatte möglich. Hierzu erstreckt sich der Befestigungsbereich vorzugsweise in radialer Richtung nach außen ausgehend von einer kreiszylindrischen Außenoberfläche des Tragstegs. Vorzugsweise ist vorgesehen, dass der als Ringbund ausgebildete Befestigungsbereich von Ausnehmungen durchsetzt ist, die zur Aufnahme von Schrauben genutzt werden können, mit denen der Befestigungsbereich an der Oberseite der Einspannplatte festgelegt werden kann.

Zweckmäßig ist es, wenn im Verbindungsspalt koaxial zum Tragsteg ein Tragring angeordnet ist, der mit der Oberseite der Einspannplatte und mit der Unterseite der Aufnahmeplatte, insbesondere abdichtend, verbunden ist. Der Tragring weist einen geringeren Durchmesser als der kreisringförmig ausgebildete Tragsteg auf und ist koaxial zum Tragsteg angeordnet. Vorzugsweise begrenzen eine Innenoberfläche des Tragstegs und eine Außenoberfläche des Tragrings zusammen mit der Oberseite der Einspannplatte und der Unterseite der Aufnahmeplatte den in diesem Fall kreisringförmig ausgebildeten Verbindungsspalt. Beispielsweise kann der Tragring dazu genutzt werden, einen Steckverbinder aufzunehmen, der für eine elektrische Kopplung der Werkstückpalette mit einem entsprechend ausgerüsteten Bearbeitungstisch einer Bearbeitungsmaschine ausgebildet ist, um beispielsweise elektrische Leistung an die Werkstückpalette bereitstellen zu können und/oder elektrische Sensorsignale von der Werkstückpalette an die Bearbeitungsmaschine weiterleiten zu können. Hierbei kann der Tragring zum einen als Abstützung für den Steckverbinder dienen und zum anderen als schützende Durchführung für elektrische Versorgungskabel und/oder Sensorkabel genutzt werden. Da der Tragring einen kleineren Durchmesser wie der kreisringförmig ausgebildete Tragsteg aufweist und eine Materialdicke des Tragstegs allenfalls gleich, vorzugsweise kleiner als eine Materialdicke des Tragrings ist, weist Tragring im Ergebnis eine ähnliche mechanische Steifigkeit wie der Tragsteg auf, womit eine inhomogene Deformation innerhalb der Werkstückpalette zumindest weitgehend vermieden werden kann. Vorzugsweise ist vorgesehen, dass eine Querschnittsfläche des Tragrings in der quer zum Abstand zwischen Aufnahmeplatte und Einspannplatte ausgerichteten Querschnittsebene weniger als 30 Prozent, vorzugsweise weniger als 10 Prozent, besonders bevorzugt weniger als 5 Prozent, der Querschnittsfläche des Tragstegs beträgt.

Erfindungsgemäß ist vorgesehen, dass der Aufnahmeplatte wenigstens eine Heizeinrichtung zugeordnet ist, die für eine Temperierung der Aufnahmeplatte ausgebildet ist. Mit der Heizeinrichtung, bei der es sich insbesondere um eine Anordnung mehrerer elektrischer Widerstandsheizungen handeln kann, die in geeigneten Ausnehmungen in der Aufnahmeplatte angeordnet sind, kann eine gezielte Temperierung der Aufnahmeplatte vorgenommen werden. Vorzugsweise ist vorgesehen, dass der Aufnahmeplatte zusätzlich zu der wenigstens einen Heizeinrichtung wenigstens eine Sensoreinrichtung, insbesondere ein Temperatursensor, zugeordnet ist, mit deren Hilfe eine Temperatur der Aufnahmeplatte ermittelt und in ein elektrisches Sensorsignal umgesetzt werden kann. Besonders bevorzugt ist vorgesehen, dass die Werkstückpalette mit der daran angeordneten Heizeinrichtung und der gegebenenfalls vorgesehenen Sensoreinrichtung elektrisch mit einer Steuerungseinrichtung verbunden sind. Die Steuerungseinrichtung kann beispielsweise der Bearbeitungsmaschine zugeordnet sein und ermöglicht eine Bereitstellung von elektrischem Strom an die Heizeinrichtung. Beispielhaft ist vorgesehen, dass die Steuerungseinrichtung eine Regelung der Temperatur der Aufnahmeplatte über eine temperaturabhängige Stromzufuhr anhand des Sensorsignals der Sensoreinrichtung verwirklicht.

In weiterer Ausgestaltung der Erfindung ist vorgesehen, dass die erste Schnittstelle wenigstens zwei Riegelzapfen umfasst, die von einer der Aufnahmeplatte abgewandten, eine Bezugsebene bildenden Unterseite der Einspannplatte abragen und deren parallel zueinander und quer zur Bezugsebene ausgerichtete Längsachsen eine Montagerichtung für die Aufnahmeplatte bestimmen, wobei die wenigstens zwei Riegelzapfen jeweils bezogen auf die Längsachsen wenigstens einen Hinterschnitt aufweisen. Mit den Riegelzapfen, die zur Aufnahme in geeigneten Verriegelungen im Bearbeitungstisch der Bearbeitungsmaschine ausgebildet sind, kann eine rasche und präzise reproduzierbare Festlegung der Werkstückpalette an dem Bearbeitungstisch verwirklicht werden. Hierbei dient der jeweilige Hinterschnitt zur formschlüssigen Verriegelung der Riegelzapfen am Bearbeitungstisch, der zu diesem Zweck mit positionsveränderlichen Riegelmitteln versehen sein kann.

Bei einer vorteilhaften Weiterbildung der Erfindung ist vorgesehen, dass an der Unterseite der Einspannplatte ein elektromechanischer Steckverbinder angeordnet ist, der für eine Steckverbindung mit einer parallel zur Montagerichtung ausgerichteten Steckbewegung und der für eine elektrische Kopplung zwischen einer an einem Bearbeitungstisch einer Bearbeitungsmaschine angeordneten Steckaufnahme und wenigstens einem der Werkstückpalette zugeordneten elektrischen Verbraucher und/oder wenigstens einer der der Werkstückpalette zugeordneten Sensoreinrichtung ausgebildet ist.

Vorteilhaft ist es, wenn der Steckverbinder zumindest bereichsweise in einer Ausnehmung der Einspannplatte aufgenommen ist, wobei die Ausnehmung von dem Tragsteg berandet ist.

Bevorzugt ist vorgesehen, dass eine erste Materialdicke der Einspannplatte um einen Betrag von weniger als 30 Prozent, bevorzugt von weniger als 20 Prozent, insbesondere von weniger als 10 Prozent von einer zweiten Materialdicke der Aufnahmeplatte abweicht. Hierdurch lässt sich in Kombination mit den unterschiedlichen Wärmeausdehnungskoeffizienten der Einspannplatte und der Aufnahmeplatte ein möglichst geringes Niveau von inneren mechanischen Spannungen in der Werkstückpalette verwirklichen.

Die Aufgabe der Erfindung wird gemäß einem zweiten Erfindungsaspekt mit einem Bearbeitungssystem zur Werkstückbearbeitung gelöst, das eine erfindungsgemäße Werkstückpalette und eine Bearbeitungsmaschine mit einem Maschinenbett, einen am Maschinenbett angebrachten Bearbeitungstisch sowie einen am Maschinenbett angeordneten Auftragkopf umfasst, wobei dem Maschinenbett eine Stelleinrichtung für eine Relativbewegung zwischen dem Bearbeitungstisch und dem Auftragkopf zugeordnet ist, wobei der Auftragkopf für eine Abgabe eines Partikelstroms von metallischen Partikeln in Richtung des Bearbeitungstischs ausgebildet ist, wobei der Bearbeitungstisch eine Schnittstellenaufnahme zur Aufnahme und Festlegung von Riegelzapfen und eine Steckaufnahme zur Aufnahme der am Bearbeitungstisch festlegbaren Werkstückpalette aufweist.

Hierbei ist vorgesehen, dass die Bearbeitungsmaschine für eine additive Werkstückbearbeitung, beispielsweise mit dem von der Hermle Maschinenbau GmbH entwickelten MPA-Verfahren (Metall Pulver Auftrag Verfahren) oder einem lasergestützten Auftragverfahren wie Lasersintern ausgebildet ist.

Hierzu umfasst die Bearbeitungsmaschine ein Maschinenbett, das auch als Maschinengestell bezeichnet wird, sowie einen am Maschinenbett angebrachten, insbesondere verstellbar gelagerten, Bearbeitungstisch. Ferner ist dem Maschinenbett ein Auftragkopf zugeordnet, der zur Durchführung des Materialauftrags auf ein Werkstück ausgebildet ist. Ferner ist eine Stelleinrichtung für eine Relativbewegung zwischen dem Bearbeitungstisch und dem Auftragkopf vorgesehen, die beispielsweise eine oder mehrere elektromechanische oder hydraulische Linearsteller umfassen kann.

Der Bearbeitungstisch umfasst eine Schnittstellenaufnahme zur Aufnahme und Festlegung von Riegelzapfen einer Werkstückpalette. Ferner kann vorgesehen sein, dass der Bearbeitungstisch eine Steckaufnahme zur Aufnahme eines der Werkstückpalette zugehörigen Steckverbinders für eine elektrische Kopplung zwischen Bearbeitungsmaschine und Werkstückpallette umfasst.

Vorteilhaft ist es, wenn dem Maschinenbett ein Abtragkopf zur spanenden Bearbeitung eines auf der Werkstückpalette festlegbaren Werkstücks, insbesondere ein Fräskopf oder ein Fräs-Drehkopf, zugeordnet ist und dass die Stelleinrichtung für eine Relativbewegung zwischen dem Bearbeitungstisch und dem Abtragkopf ausgebildet ist und/oder dass zusätzlich zur Bearbeitungsmaschine eine Wärmekammer vorgesehen ist, die zur zeitweiligen Aufnahme der Werkstückpalette während eines Erwärmungsvorgangs ausgebildet ist.

Bevorzugt ist vorgesehen, dass zusätzlich zur Bearbeitungsmaschine ein Bearbeitungszentrum vorgesehen ist, das wenigstens einen Abtragkopf zur spanenden Bearbeitung eines auf der Werkstückpalette festlegbaren Werkstücks, insbesondere einen Fräskopf, umfasst und dass ein Bearbeitungstisch des Bearbeitungszentrums eine Schnittstellenaufnahme zur Aufnahme und Festlegung von Riegelzapfen und eine Steckaufnahme zur Aufnahme einer erfindungsgemäßen Werkstückpalette umfasst. Beispielhaft kann vorgesehen werden, dass eine Werkstückpalette oder mehrerer Werkstückpaletten mit Hilfe eines automatisierten Handhabungsgeräts (Werkstückwechsler), insbesondere eines Industrieroboters, für eine alternierende Abfolge von Auftragbearbeitungsschritten und Abtragbearbeitungsschritten zwischen der Bearbeitungsmaschine und dem Bearbeitungszentrum gewechselt wird. Hierbei ist es vorteilhaft, dass sowohl der Bearbeitungstisch der Bearbeitungsmaschine als auch der Bearbeitungstisch des Bearbeitungszentrums, bei dem es sich insbesondere um ein Fräs-Drehzentrum handeln kann, die gleichen Schnittstellenaufnahmen aufweisen, mit denen eine schnelle Festlegung oder Freigabe der jeweiligen Werkstückpalette am jeweiligen Bearbeitungstisch mit einer hohen Wiederholgenauigkeit erzielt werden kann.

Eine vorteilhafte Ausführungsform der Erfindung ist in der Zeichnung dargestellt. Hierbei zeigt:
- Figur 1: eine rein schematische Darstellung eines Bearbeitungssystems zur additiven und subtraktiven Werkstückbearbeitung mit einem Maschinenbett, einem Bearbeitungstisch, einem Auftragkopf, einem Abtragkopf sowie einer Werkstückpalette und einem Werkstück,
- Figur 2: eine Schnittdarstellung der Werkstückpalette gemäß der Figur 1, und
- Figur 3: eine Schnittdarstellung des Bearbeitungstischs gemäß der Figur 1.

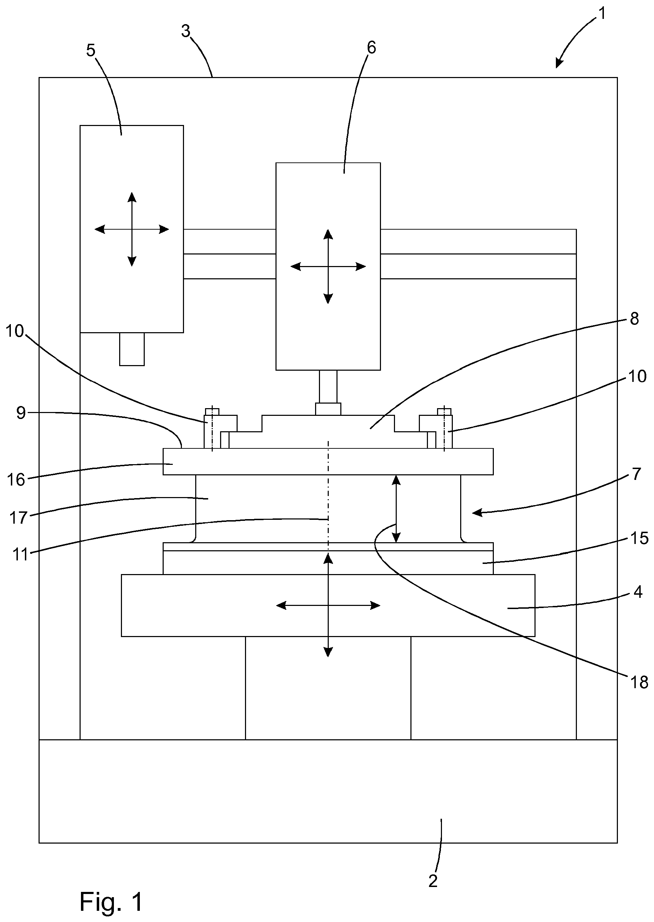

Ein in der Figur 1 rein schematisch dargestelltes Bearbeitungssystem 1 ist rein exemplarisch zur Durchführung einer additiven Werkstückbearbeitung und einer subtraktiven Werkstückbearbeitung ausgebildet. Beispielhaft handelt es sich bei dem Bearbeitungssystem um ein Bearbeitungszentrum, das zur Durchführung von Fräsvorgängen (subtraktive Werkstückbearbeitung), zur Durchführung von Drehvorgängen (subtraktive Werkstückbearbeitung) sowie zur Durchführung des von der Hermle Maschinenbau GmbH entwickelten MPA-Verfahrens (additive Werkstückbearbeitung) ausgebildet ist, wobei die vorliegende Erfindung auch für andere Bearbeitungsverfahren, insbesondere andere additive Fertigungsverfahren, nutzbar ist.

Rein exemplarisch ist vorgesehen, dass das Bearbeitungssystem 1 ein Maschinenbett 2 umfasst, auf das ein Maschinengehäuse 3 aufgesetzt ist. Das Maschinengehäuse 3 begrenzt ein nur schematisch angedeutetes Raumvolumen, innerhalb dessen die Bearbeitungsvorgänge vorgenommen werden, die mit Hilfe des Bearbeitungssystems 1 durchführbar sind. Beispielhaft sind am Maschinenbett 2 ein Bearbeitungstisch 4, ein Auftragkopf 5 sowie ein Abtragkopf 6 angeordnet. Bei einer nicht näher dargestellten Variante des Bearbeitungssystems ist vorgesehen, dass der Auftragskopf mit dem Abtragkopf kombiniert ist oder dass der Auftragskopf und der Abtragkopf in unterschiedlichen Bearbeitungsmaschinen angeordnet sind.

Rein exemplarisch ist vorgesehen, dass dem Bearbeitungstisch 4, dem Auftragkopf 5 sowie dem Abtragkopf 6 jeweils nicht näher dargestellte Stelleinrichtungen, insbesondere elektromechanische Stellantriebe, zugeordnet sind. Somit können der Auftragkopf 5 und der Abtragkopf 6 jeweils in wenigstens zwei zueinander senkrechten Raumrichtungen relativbeweglich gegenüber dem Maschinenbett 2 verfahren werden. Ferner kann beispielsweise vorgesehen sein, dass der Auftragkopf 5 und der Abtragkopf 6 in nicht näher dargestellter Weise zusätzlich normal zur Darstellungsebene der Figur 1 verfahren werden können. Der Bearbeitungstisch 4 kann in zwei Raumrichtungen rotativ relativbeweglich gegenüber dem Maschinenbett 2 gedreht werden. Insbesondere kann der Bearbeitungstisch 4 um die Mittelachse 11 der Werkstückpalette 7 gedreht werden, um eine Drehbearbeitung zu ermöglichen.

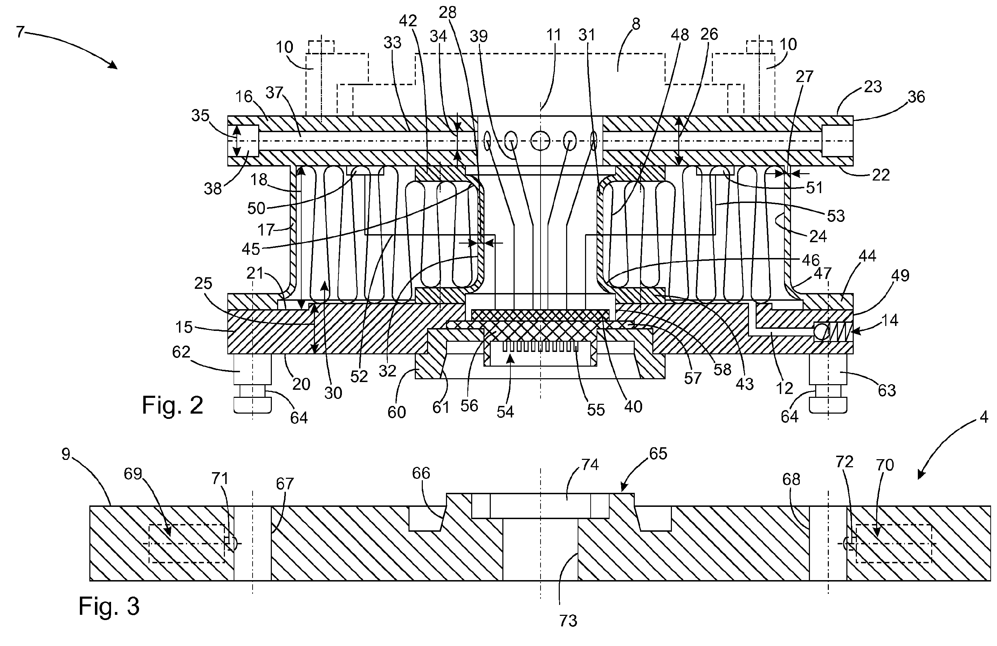

Auf dem rein exemplarisch plattenförmig ausgebildeten Bearbeitungstisch 4 ist eine Werkstückpalette 7 angeordnet, die mit in den Figuren 2 und 3 näher dargestellten Befestigungsmitteln (Riegelzapfen 62, 63; Riegelelemente 71, 72) an dem Bearbeitungstisch 4 festgelegt ist und die ihrerseits ein Werkstück 8 trägt, das mit Hilfe des Auftragkopfs 5 sowie des Abtragkopfs 6 bearbeitet werden soll.

Eine Bearbeitung des Werkstücks 8 mit dem Abtragkopf 6, bei dem es sich beispielsweise um einen Fräskopf zur Durchführung von Fräsvorgängen am Werkstück 8 handeln kann, ist beispielhaft bei einer Werkstücktemperatur von 20 Grad Celsius möglich, kann aber auch bei anderen, insbesondere höheren, Werkstücktemperaturen durchgeführt werden.

Bei einer additiven Werkstückbearbeitung ist demgegenüber von einer deutlichen höheren Werkstücktemperatur auszugehen. Dies ist darauf zurückzuführen, dass beispielsweise für die Durchführung des MPA-Verfahrens eine Erwärmung des Werkstücks 8 auf eine Temperatur erforderlich ist, die in einem Intervall von ungefähr 350 Grad Celsius bis 450 Grad Celsius liegt. Dabei ist die Erwärmung des Werkstücks 8 mit Hilfe einer teilweisen Beheizung der Werkstückpalette 7 vorgesehen. Aufgrund der von der teilweise beheizten Werkstückpalette 7 sowie vom beheizten Werkstück 8 abgestrahlten Wärme kommt es zumindest zu einer gewissen Erwärmung des vom Maschinengehäuse 3 umschlossenen Raumvolumens.

Um die Erwärmung der übrigen Komponenten des Bearbeitungssystems 1 so gering wie möglich zu halten, sind Maßnahmen vorzusehen, um beispielsweise einen Wärmeübergang von der Werkstückpalette 7 zu begrenzen. Hierzu ist die Werkstückpalette 7 in nachstehend näher beschriebener Weise eingerichtet. Ferner kann vorgesehen werden, von der Werkstückpalette 7 und vom Werkstück 8 in das Maschinengehäuse 3 abgestrahlte Wärme in geeigneter Weise aus dem Maschinengehäuse 3 abzuführen, beispielsweise durch eine Luftumwälzung mit zwischengeschalteter Kühlung.

Wie bereits aus der rein schematischen Darstellung der Figur 1 entnommen werden kann, umfasst die Werkstückpalette 7 eine aus einem ersten Metallmaterial, insbesondere Stahl, hergestellte Einspannplatte 15, eine beabstandet von der Einspannplatte 15 angeordnete, aus einem zweiten Metallmaterial, insbesondere Stahl, hergestellte Aufnahmeplatte 16 sowie einen Tragsteg 17, der zwischen der Einspannplatte 15 und der Aufnahmeplatte 16 erstreckt ist.

Beispielhaft ist vorgesehen, dass die Einspannplatte 15 mit einer in der Figur 2 näher dargestellten Unterseite 20 auf der im Wesentlichen eben ausgebildeten Oberfläche 9 des Bearbeitungstischs 4 aufliegt. Dabei bildet die im Wesentlichen eben ausgebildete Unterseite 20 eine erste Schnittstelle der Werkstückpalette 7.

Ferner kann vorgesehen sein, dass sich der Tragsteg 17 zwischen einer Oberseite 21 der Einspannplatte 15 und einer Unterseite 22 der Aufnahmeplatte 16 erstreckt. Darüber hinaus ist vorgesehen, dass das Werkstück 8 auf einer rein exemplarisch eben ausgebildeten, als zweite Schnittstelle der Werkstückpalette 7 dienenden Oberseite 23 der Aufnahmeplatte 16 beispielsweise mit Spannpratzen 10 festgelegt ist.

Wie aus der rein schematischen und nicht maßstäblichen Darstellung der Figur 2 entnommen werden kann, ist der Tragsteg 17 einstückig mit der Aufnahmeplatte 16 ausgebildet ist und erstreckt sich von der Unterseite 22 der Aufnahmeplatte 16 längs einer Mittelachse 11 der Werkstückpalette 7 in Richtung der Oberseite 21 der Einspannplatte 15. Der Tragsteg 17 ist rein exemplarisch aus dem gleichen Metallmaterial wie die Aufnahmeplatte 16 hergestellt. Ferner ist rein exemplarisch vorgesehen, dass die Einspannplatte 15 und die Aufnahmeplatte 16 jeweils als kreiszylindrische Planparallelplatten bildet sind, die jeweils koaxial zur Mittelachse 11 angeordnet sind.

Ferner ist rein exemplarisch vorgesehen, dass eine erste Materialdicke 25 der Einspannplatte sowie eine zweite Materialdicke 26 der Aufnahmeplatte im Wesentlichen identisch ausgebildet sind. Demgegenüber ist eine dritte Materialdicke 27 des Tragstegs 17 erheblich kleiner als die erste und zweite Materialdicke 25, 26 gewählt. Beispielhaft betragen die erste Materialdicke 25 und die zweite Materialdicke 26 jeweils ca. 30mm, während die dritte Materialdicke ca. 1mm beträgt.

Die Unterseite 22 der Aufnahmeplatte 16, die Oberseite 21 der Einspannplatte 15 sowie eine Innenoberfläche 24 des Tragstegs 17 begrenzen einen Hohlraum 30. Rein exemplarisch wird der Hohlraum 30 zusätzlich durch eine Außenoberfläche 32 eines Tragrings 31 begrenzt, der koaxial zur Mittelachse 11 angeordnet ist. Dabei sind sowohl der Tragring 31 als auch der Tragsteg 17 als kreiszylindrische Hülsen mit einer Erstreckung längs der Mittelachse 11 ausgebildet und koaxial zueinander angeordnet. Ferner ist vorgesehen, dass eine vierte Materialdicke 28 des Tragrings 31 rein exemplarisch 0,5 mm beträgt, die diesbezügliche Darstellung der Figur 2 ist nicht maßstäblich.

Durch die Auswahl der dritten Materialdicke 27 und der vierten Materialdicke 28, die erheblich dünner als die erste Materialdicke 25 und die zweite Materialdicke 26 sind, kann ein hoher Wärmeübergangswiderstand zwischen der Aufnahmeplatte 16 und der Einspannplatte 15 verwirklicht werden, womit ein Wärmetransport zwischen der Aufnahmeplatte 16 und der Einspannplatte 15 begrenzt wird.

Den Darstellungen der Figuren 1 und 2 ist zu entnehmen, dass eine Spaltweite eines zwischen der Unterseite 20 der Einspannplatte 15 und der Oberseite 23 der Aufnahmeplatte 16 erstreckten Verbindungsspalts 18 größer als die erste Materialdicke 25 und die zweite Materialdicke 26 gewählt ist, beispielsweise das 1,6-fache der ersten Materialdicke 25 beträgt.

Beispielhaft ist vorgesehen, dass der als kreiszylindrische Hülse längs der Mittelachse 11 erstreckte Tragring 31 jeweils endseitig einen als Befestigungsbereich dienenden Ringbund 42, 43 aufweist. Beispielhaft ist vorgesehen, dass der Ringbund 42 mit einer axial ausgerichteten Stirnfläche an der Unterseite 22 der Aufnahmeplatte 16 anliegt und mit nicht näher dargestellten Befestigungsmitteln, beispielsweise Schrauben, abdichtend mit der Aufnahmeplatte 16 verbunden ist. In gleicher Weise liegt der Ringbund 43 mit einer axial ausgerichteten Stirnfläche an der Oberseite 21 der Einspannplatte 15 an und ist dort mit ebenfalls nicht näher dargestellten Befestigungsmitteln, insbesondere Schrauben, abdichtend festgelegt.

Der einstückig an der Aufnahmeplatte 16 angeformte Tragsteg 17 ist an einem der Aufnahmeplatte 16 abgewandten Endbereich mit einem Ringbund 44 versehen. Dieser Ringbund 44 liegt mit einer axial ausgerichteten Stirnfläche an der Oberseite 21 der Einspannplatte 15 an und ist mit nicht näher dargestellten Befestigungsmitteln, insbesondere Schrauben, an der Einspannplatte 15 abdichtend festgelegt.

Rein exemplarisch ist vorgesehen, dass ein Übergang zwischen dem jeweiligen Ringbund 42, 43, 44 und dem Tragring 31 bzw. dem Tragsteg 17 jeweils mit einer Krümmung 45, 46, 47 ausgebildet ist. Die Krümmungen 45, 46, 47 sind unter Berücksichtigung der jeweiligen Materialdicke 27, 28 sowie der Eigenschaften des Metallmaterials, aus dem der Tragring 31 bzw. der Tragsteg 17 hergestellt sind, derart bemessen, dass diese Bereiche des Tragrings 31 bzw. des Tragstegs 17 als Festkörpergelenk in gewissen Grenzen elastisch deformiert werden können. Hierdurch wird eine Relativbewegung zwischen der Einspannplatte 15 und der Aufnahmeplatte 16, wie sie bei einer wärmebedingten Ausdehnung der Werkstückpalette 7 auftreten kann, ermöglicht.

Beispielhaft ist vorgesehen, dass in der Aufnahmeplatte 16, die als kreiszylindrische Planparallelplatte ausgebildet ist, mehrere jeweils ausgehend von der Mittelachse 11 in radialer Richtung nach außen erstreckte Axialbohrungen eingebracht sind, die beispielhaft bezogen auf die Mittelachse 11 in einer nicht dargestellten, quer zur Mittelachse 11 ausgerichteten Querschnittsebene in gleicher Winkelteilung angeordnet sind. Die Axialbohrungen 33 sind jeweils kreiszylindrisch mit einem ersten Durchmesser 34 ausgebildet und weisen jeweils endseitig einen Durchmessersprung auf einen zweiten Durchmesser 35 auf und münden an einer kreisringförmigen Außenoberfläche 36 der Aufnahmeplatte 16 aus. In den Axialbohrungen 33 sind jeweils nicht näher dargestellte, kreiszylindrisch geformte Heizpatronen 37 aufgenommen, die jeweils durch einen in nicht näher dargestellter Weise in die Axialbohrung 33 angeschraubten in Stopfen 38 in der jeweiligen Axialbohrung 33 festgelegt sind. Jede der Heizpatronen 37 ist über eine elektrische Versorgungsleitung 39 mit einer gedruckten Schaltung 40 verbunden, die einem Steckverbinder 54 zugehörig ist, der in der Einspannplatte 15 angeordnet ist.

Rein exemplarisch sind an der Unterseite 22 der Aufnahmeplatte 16 zwei Temperatursensoren 50, 51 angeordnet, die über Sensorleitungen 52, 53 mit der gedruckten Schaltung 40 elektrisch verbunden sind. Die gedruckte Schaltung 40 steht ihrerseits in nicht näher dargestellter Weise mit Kontaktstiften 55 eines der Einspannplatte 15 zugeordneten elektromechanischen Steckverbinders 54 in Verbindung. Der Steckverbinder 54 weist rein exemplarisch einen rotationssymmetrisch zur Mittelachse 11 ausgebildetes Steckergehäuses 56 auf, das mit einem radial abragenden Ringbund 57 in einer beispielhaft als Stufenbohrung ausgebildeten Ausnehmung 58 in der Einspannplatte 15 aufgenommen ist. Um eine Festlegung des Steckverbinders 54 an der Einspannplatte 15 zu gewährleisten, ist eine Zentrierbuchse 60 in der Ausnehmung 58 aufgenommen, die den Ringbund 57 des Steckverbinders an der Einspannplatte 15 formschlüssig festlegt. Eine Innenoberfläche 61 der Zentrierbuchse 60 ist bereichsweise konusabschnittsförmig ausgebildet und dient damit zur Zentrierung der Werkstückpalette 7 gegenüber dem Bearbeitungstisch 4.

Der Bearbeitungstisch 4 ist gemäß der Darstellung der Figur 3 mit einem zentral angeordneten Zentrierzapfen 65 versehen, dessen zumindest bereichsweise konusabschnittsförmig ausgebildete Außenoberfläche 66 auf die Innenoberfläche 61 der Zentrierbuchse 60 angepasst ist, um eine formschlüssige Zentrierung zwischen der Werkstückpalette 7 und dem Bearbeitungstisch 4 zu gewährleisten.

Für eine Verriegelung der Werkstückpalette 7 am Bearbeitungstisch 4 umfasst der Bearbeitungstisch 4 rein exemplarisch wenigstens zwei jeweils kreiszylindrisch ausgebildete Durchgangsbohrungen 67, 68, die jeweils senkrecht zur eben ausgebildeten Oberfläche 9 des Bearbeitungstischs 4 ausgerichtet sind. Jeder der Durchgangsbohrungen 67, 68 ist ein Stellglied 69, 70 zugeordnet, das beispielsweise als Hydraulikzylinder ausgebildet sein kann und das zur linearen Bewegung eines jeweils zugeordneten Riegelelements 71, 72 vorgesehen ist. Mit dem Riegelelement 71, 72 kann eine formschlüssige Festlegung eines in der jeweiligen Durchgangsbohrung 67, 68 aufzunehmenden, an der Unterseite 20 der Einspannplatte 15 angeordneten Riegelzapfens 62, 63 vorgesehen werden. Hierzu ist jeder der Riegelzapfen 62, 63 mit einer als Ringnut ausgebildeten Ausnehmung 64 versehen, die in axialer Richtung längs der Mittelachse 11 einen Hinterschnitt bildet und ein Abnehmen der Werkstückpalette 7 vom Bearbeitungstisch 4 verhindert, wenn die Riegelelemente 71, 72 der Stellglieder 69, 70 in die jeweilige Ausnehmung 64 eingreifen.

In einer zentralen Ausnehmung 73 des Zentrierzapfens 65 ist eine Steckbuchse 74 angeordnet, die für eine elektromechanische Kopplung mit dem Steckverbinder 54 vorgesehen ist und die nicht näher dargestellte, an die Kontaktstiften 55 angepasste Steckhülsen umfasst, die ihrerseits in nicht näher dargestellter Weise mit einer elektrischen Leitungsanordnung verbunden sind, die die Ausnehmung 73 durchsetzt und die in ebenfalls nicht näher dargestellter Weise mit einer Maschinensteuerung des Bearbeitungssystems 1 verbunden sein kann.

Wie der Figur 2 ferner entnommen werden kann, ist im Hohlraum 30 ein rein exemplarisch aus Glasfasermatten gebildetes Isolationsmaterial 48 aufgenommen, das eine Wärmeübertragung zwischen der Aufnahmeplatte 16 und der Einspannplatte 15 durch Strahlungswärme zumindest weitestgehend ausschließt. Somit ist ein Wärmeübergang zwischen der Aufnahmeplatte 16 und der Einspannplatte 15 weitestgehend auf die thermische Kopplung dieser beiden Komponenten mittels des Tragstegs 17 und des Tragrings 31 beschränkt.

Da gemäß der vorstehenden Beschreibung sowohl der Tragring 31 als auch der Tragsteg 17 jeweils abdichtend sowohl mit der Einspannplatte 15 als auch der Aufnahmeplatte 16 verbunden sind, ist der Hohlraum 30 abgedichtet, insbesondere gasdicht ausgeführt. Um eine Expansion von Gas im Hohlraum 30 während der Erwärmung der Aufnahmeplatte 16 sowie eine damit verbundene Druckerhöhung im Hohlraum 30 auf ein Niveau zu begrenzen, bei dem es nicht zu einer Beschädigung der Werkstückpalette 7 kommen kann, ist in der Einspannplatte 15 ein Fluidkanal 12 ausgebildet. Der Fluidkanal 12 erstreckt sich zwischen dem Hohlraum 30 und einer Umgebung der Werkstückpalette 7 und mündet rein exemplarisch an einer Außenumfangsfläche 49 der Einspannplatte 15 aus. Im Fluidkanal 12 ist rein exemplarisch ein federvorbelastetes Rückschlagventil 14 angeordnet, das derart konfiguriert ist, dass es bei Vorliegen einer vorgebbaren Druckdifferenz zwischen einem Druck im Hohlraum 30 und einem Umgebungsdruck öffnet und somit ein Entweichen von Gas aus dem Hohlraum 30 ermöglicht.

Eine Funktionsweise des Bearbeitungssystems 1 kann wie folgt beschrieben werden:
Zunächst wird die Werkstückpalette 7 abseits des Bearbeitungssystems 1 an einem geeigneten Arbeitsplatz mit einem Werkstück 8 versehen, das präzise zu der als Zentriermittel dienenden Zentrierbuchse 60 ausgerichtet wird und in dieser Position mit Hilfe von Spannpratzen 10 an der Oberseite 23 der Aufnahmeplatte 16 festgelegt wird.

Anschließend wird die mit dem Werkstück 8 versehene Werkstückpalette 7 in einen ebenfalls nicht dargestellten Wärmeschrank eingebracht, in dem beispielhaft eine Temperatur herrscht, wie sie sich für die Einspannplatte 15 bei der nachfolgenden Bearbeitung im Bearbeitungssystem 1 aufgrund der Beheizung der Aufnahmeplatte 16 und des daran angebrachten Werkstücks 8 ohnehin ergibt. In diesem Wärmeschrank findet eine elektrische Kontaktierung des Steckverbinders 54 statt, so dass die Heizpatronen 37 in der Aufnahmeplatte 16 mit elektrischer Energie versorgt werden können und eine Erwärmung der Aufnahmeplatte 16 sowie des daran angebrachten Werkstücks 8 bis auf eine vorgebbare Zieltemperatur, insbesondere 400 Grad Celsius, vorgenommen werden kann.

Mit dem Erreichen der Zieltemperatur für das Werkstück 8 kann die Werkstückpalette 7 bei Freiwerden des Bearbeitungssystems 1 in das Bearbeitungssystem 1 überführt werden und dort auf dem Bearbeitungstisch 4 aufgesetzt werden. Dieser Aufsetzvorgang erfolgt im Zuge einer nach unten gerichteten Absenkbewegung für die Werkstückpalette 7 längs der Mittelachse 11, wodurch die Riegelzapfen 62, 63 in die Durchgangsbohrungen 67, 68 eingreifen. Ferner wird durch die mechanische Wechselwirkung zwischen der Zentrierbuchse 60 und dem Zentrierzapfen 65 eine präzise mechanische Ausrichtung der Werkstückpalette 7 gegenüber dem Bearbeitungstisch 4 gewährleistet. Anschließend erfolgt eine Betätigung der Stellglieder 69, 70, so dass die Riegelelemente 71, 72 in die Ausnehmungen 64 der Riegelzapfen 62, 63 einfahren und damit eine in allen Raumrichtungen formschlüssige Verriegelung der Werkstückpalette 7 am Bearbeitungstisch 4 gewährleistet ist.

Der geometrische Zentrumspunkt der Werkstückpalette 7 wird in Bezug auf den Bearbeitungstisch 4 über die Zentrierwirkung zwischen der Zentrierbuchse 60 und der Außenoberfläche 66 des Zentrierzapfens 65 spielfrei festgelegt. Vorzugsweise sind ausschließlich diese beiden Komponenten für die Zentrierung der Werkstückpalette 7 gegenüber dem Bearbeitungstisch 4 zuständig, während alle weiteren Komponenten wie beispielsweise die Riegelzapfen 62, 63 lediglich der Festlegung der Werkstückpalette 7 am Bearbeitungstisch 4, nicht jedoch der Zentrierung hinsichtlich der Mittelachse 11 dienen.

Da im Zuge der Anbringung der Werkstückpalette 7 am Bearbeitungstisch 4 auch die elektrische Verbindung zwischen dem Steckverbinder 54 und der Steckbuchse 74 hergestellt wird, kann ab diesem Zeitpunkt auch eine weitere Zufuhr von elektrischer Energie an die Heizpatronen 37 in der Aufnahmeplatte 16 erfolgen, so dass die Temperatur der Aufnahmeplatte 16 und des daran angebrachten Werkstücks 8 weiter aufrecht erhalten werden kann. Hierbei kann durch eine nicht dargestellte Maschinensteuerung eine Überwachung der Temperatur der Aufnahmeplatte 16 mit Hilfe der Temperatursensoren 50, 51 vorgenommen werden und eine entsprechend der Zieltemperatur für das Werkstück 8 notwendige Energieversorgung der Heizpatronen 37 vorgenommen werden.

Anschließend können eine Relativbewegung des Bearbeitungstischs 4 sowie geeignete Relativbewegungen des Auftragkopfs 5 bzw. des Abtragkopfs 6 vorgenommen werden, um eine additive oder subtraktive Bearbeitung des Werkstücks 8 vorzunehmen. Nach Beendigung der Bearbeitungsschritte am Werkstück 8 findet eine Entriegelung der Werkstückpalette 7 durch geeignete Ansteuerung der Stellglieder 69, 70 statt, so dass die Werkstückpalette 7 mit den daran aufgenommenen Werkstücks 8 aus dem Bearbeitungssystem entnommen werden kann.

## Patentansprüche

1. Werkstückpalette (7) zur Verwendung für eine additive und eine subtraktive Werkstückbearbeitung, mit einer Einspannplatte (15), die eine erste Schnittstelle (20) umfasst, die zur formschlüssigen Festlegung an einem Bearbeitungstisch (4) einer Bearbeitungsmaschine (1) ausgebildet ist, mit einer Aufnahmeplatte (16) zur Festlegung eines Werkstücks (8), die eine zweite Schnittstelle (23) zur Festlegung eines Werkstücks (8) umfasst, wobei die Einspannplatte (15) und die Aufnahmeplatte (16) beabstandet zueinander angeordnet sind und wobei in einem Verbindungsspalt (18) zwischen einer Oberseite (21) der Einspannplatte (15) und einer Unterseite (22) der Aufnahmeplatte (16) ein Tragsteg (17) angeordnet ist, der mit der Oberseite (21) der Einspannplatte (15) und mit der Unterseite (22) der Aufnahmeplatte (16) verbunden ist, wobei der Tragsteg (17) in einer parallel zur Unterseite der Aufnahmeplatte (16) ausgerichteten Querschnittsebene eine Querschnittsfläche aufweist, die weniger als 15 Prozent, bevorzugt weniger als 10 Prozent, besonders bevorzugt weniger als 5 Prozent, insbesondere weniger als 1 Prozent, einer Fläche der Unterseite der Aufnahmeplatte (16) beträgt, **dadurch gekennzeichnet, dass** der Aufnahmeplatte (16) wenigstens eine Heizeinrichtung (37) zugeordnet ist, die für eine Temperierung der Aufnahmeplatte (16) ausgebildet ist.

2. Werkstückpalette (7) nach Anspruch 1, **dadurch gekennzeichnet, dass** die Einspannplatte (15) aus einem ersten Metallwerkstoff mit einem ersten Wärmeausdehnungskoeffizienten hergestellt ist und dass die Aufnahmeplatte (16) aus einem zweiten Metallwerkstoff mit einem zweiten Wärmeausdehnungskoeffizienten hergestellt ist, wobei der erste Wärmeausdehnungskoeffizient größer als der zweite Wärmeausdehnungskoeffizient ist und wobei der zweite Wärmeausdehnungskoeffizient weniger als 16/1000000 [1/K] beträgt.

3. Werkstückpalette (7) nach Anspruch 1 oder 2, **dadurch gekennzeichnet, dass** der Tragsteg (17) zusammen mit der Einspannplatte (15) und der Aufnahmeplatte (16) wenigstens einen, insbesondere abgeschlossenen, Hohlraum (30) begrenzt und/oder dass der Tragsteg (17) aus einem Metallmaterial hergestellt ist, das eine spezifische Wärmeleitfähigkeit von weniger als 30 W/mK, insbesondere von weniger als 20 W/mK, und/oder einen Wärmeausdehnungskoeffizienten von weniger als 16/1000000 [1/K], insbesondere von weniger als 14/1000000 [1/K] aufweist.

4. Werkstückpalette (7) nach Anspruch 3, **dadurch gekennzeichnet, dass** im Hohlraum (30) wenigstens ein Isolationsmaterial (48) aus der Gruppe: Gas, Flüssigkeit, Feststoff, aufgenommen ist und/oder dass der Hohlraum (30) evakuiert ist.

5. Werkstückpalette (7) nach Anspruch 3 oder 4, **dadurch gekennzeichnet, dass** an der Einspannplatte (15) oder an der Aufnahmeplatte (16) oder an dem Tragsteg (17) ein Ausgleichsventil (14) angebracht ist, das für eine vorgebbare, fluidisch kommunizierende Verbindung zwischen dem Hohlraum (30) und einer Umgebung der Werkstückpalette (7) zur Begrenzung eines Differenzdrucks zwischen dem Hohlraum (30) und der Umgebung ausgebildet ist.

6. Werkstückpalette (7) nach einem der vorhergehenden Ansprüche, **dadurch gekennzeichnet, dass** der Tragsteg (17) einstückig mit der Aufnahmeplatte (16) ausgebildet ist und von einer der Einspannplatte (15) zugewandten Unterseite (22) der Aufnahmeplatte (16) in Richtung der Einspannplatte (15) abragt und an einer der Aufnahmeplatte (16) zugewandten Oberseite (21) der Einspannplatte (15) mit Befestigungsmitteln festgelegt ist.

7. Werkstückpalette (7) nach Anspruch 6, **dadurch gekennzeichnet, dass** der Tragsteg (17) als Kreisring ausgebildet ist, der sich längs einer Abstandsachse (11) zwischen der Einspannplatte (15) und der Aufnahmeplatte (16) erstreckt und der einen Befestigungsbereich aufweist, der als in radialer Richtung, insbesondere nach außen, erstreckter Ringbund (44) ausgebildet ist und der von den an der Oberseite (21) der Einspannplatte (15) angeordneten Befestigungsmitteln durchsetzt ist.

8. Werkstückpalette (7) nach Anspruch 6 oder 7, **dadurch gekennzeichnet, dass** im Verbindungsspalt (18) koaxial zum Tragsteg (17) ein Tragring (31) angeordnet ist, der mit der Oberseite der Einspannplatte (15) und mit der Unterseite der Aufnahmeplatte (16), insbesondere abdichtend, verbunden ist.

9. Werkstückpalette (7) nach einem der vorhergehenden Ansprüche, **dadurch gekennzeichnet, dass** die erste Schnittstelle wenigstens zwei Riegelzapfen (62, 63) umfasst, die von einer der Aufnahmeplatte (16) abgewandten, eine Bezugsebene bildenden Unterseite (20) der Einspannplatte (15) abragen und deren parallel zueinander und quer zur Bezugsebene ausgerichtete Längsachsen eine Montagerichtung für die Aufnahmeplatte (16) bestimmen, wobei die wenigstens zwei Riegelzapfen (62, 63) jeweils bezogen auf die Längsachsen wenigstens einen Hinterschnitt (64) aufweisen.

10. Werkstückpalette (7) nach Anspruch 9, **dadurch gekennzeichnet, dass** an der Unterseite (20) der Einspannplatte (15) ein elektromechanischer Steckverbinder (54) angeordnet ist, der für eine Steckverbindung mit einer parallel zur Montagerichtung ausgerichteten Steckbewegung und für eine elektrische Kopplung zwischen einer an einem Bearbeitungstisch (4) einer Bearbeitungsmaschine (1) angeordneten Steckaufnahme (74) und wenigstens einem der Werkstückpalette (7) zugeordneten elektrischen Verbraucher (37) und/oder wenigstens einer der der Werkstückpalette (7) zugeordneten Sensoreinrichtung (50) ausgebildet ist

11. Werkstückpalette (7) nach Anspruch 10, **dadurch gekennzeichnet, dass** der Steckverbinder (54) zumindest bereichsweise in einer Ausnehmung (58) der Einspannplatte (15) aufgenommen ist, wobei die Ausnehmung (58) bereichsweise von dem Tragsteg (17) berandet ist.

12. Werkstückpalette (7) nach einem der vorhergehenden Ansprüche, **dadurch gekennzeichnet, dass** eine erste Materialdicke (25) der Einspannplatte (15) um einen Betrag von weniger als 30 Prozent, bevorzugt von weniger als 20 Prozent, insbesondere von weniger als 10 Prozent von einer zweiten Materialdicke (26) der Aufnahmeplatte (16) abweicht.

13. Bearbeitungssystem (1) zur Werkstückbearbeitung, mit einer Werkstückpalette (7) nach einem der vorhergehenden Ansprüche sowie mit einer Bearbeitungsmaschine, die ein Maschinenbett (2), einen am Maschinenbett (2) angebrachten Bearbeitungstisch (4) sowie einen am Maschinenbett (2) angeordneten Auftragkopf (5) umfasst, wobei dem Maschinenbett (2) eine Stelleinrichtung für eine Relativbewegung zwischen dem Bearbeitungstisch (4) und dem Auftragkopf (5) zugeordnet ist, wobei der Auftragkopf (5) für eine Abgabe eines Partikelstroms von metallischen Partikeln in Richtung des Bearbeitungstischs (4) ausgebildet ist, wobei der Bearbeitungstisch (4) eine Schnittstellenaufnahme (67, 68) zur Aufnahme und Festlegung von Riegelzapfen (62, 63) und eine Steckaufnahme (74) zur Aufnahme der am Bearbeitungstisch (4) festlegbaren Werkstückpalette (7).

14. Bearbeitungssystem (1) nach Anspruch 13, **dadurch gekennzeichnet, dass** dem Maschinenbett (2) ein Abtragkopf (6) zur spanenden Bearbeitung eines auf der Werkstückpalette (7) festlegbaren Werkstücks (8), insbesondere ein Fräskopf, zugeordnet ist und dass die Stelleinrichtung für eine Relativbewegung zwischen dem Bearbeitungstisch (4) und dem Abtragkopf (6) ausgebildet ist und/oder dass zusätzlich zur Bearbeitungsmaschine eine Wärmekammer vorgesehen ist, die zur zeitweiligen Aufnahme der Werkstückpalette (7) während eines Erwärmungsvorgangs ausgebildet ist.

15. Bearbeitungssystem (1) nach Anspruch 13 oder 14, **dadurch gekennzeichnet, dass** zusätzlich zur Bearbeitungsmaschine ein Bearbeitungszentrum vorgesehen ist, das wenigstens einen Abtragkopf (6) zur spanenden Bearbeitung eines auf der Werkstückpalette (7) festlegbaren Werkstücks (8), insbesondere einen Fräskopf, umfasst und dass ein Bearbeitungstisch (4) des Bearbeitungszentrums eine Schnittstellenaufnahme (67, 68) zur Aufnahme und Festlegung von Riegelzapfen (62, 63) und eine Steckaufnahme (74) zur Aufnahme einer am Bearbeitungstisch (4) festlegbaren Werkstückpalette (7) nach einem der Ansprüche 1 bis 13 umfasst.

## Claims

1. Workpiece pallet (7) for additive and subtractive workpiece machining, comprising a clamping plate (15) which comprises a first interface (20) for a form-fitting fixation to a machining table (4) of a processing machine (1), the workpiece pallet (7) further comprising a receiving plate (16), which comprises a second interface for fixing a workpiece, wherein the clamping plate (15) and the receiving plate (16) are arranged spaced apart from one another and wherein a supporting web (17) is arranged in a connecting gap (18) between an upper surface (21) of the clamping plate (15) and a lower surface (22) of the receiving plate (16), which supporting web (17) is connected to the upper surface (21) of the clamping plate (15) and to the lower surface (22) of the receiving plate (16), the supporting web (17) having in a cross-sectional plane aligned parallel to the lower surface of the receiving plate (16) a cross-sectional area which is less than 15 percent, preferably less than 10 percent, particularly preferably less than 5 percent, and especially less than 1 percent, of an area of the lower surface of the receiving plate, **characterized in that** at least one heating device (37) is assigned to the receiving plate (16), which is designed for temperature control of the receiving plate (16).

2. Workpiece pallet (7) according to claim 1, **characterized in that** the clamping plate (15) is made of a first metal material with a first coefficient of thermal expansion and that the receiving plate (16) is made of a second metal material with a second coefficient of thermal expansion, wherein the first coefficient of thermal expansion is greater than the second coefficient of thermal expansion and wherein the second coefficient of thermal expansion is less than 16/1000000 [1/K].

3. Workpiece pallet (7) according to claim 1 or 2, **characterized in that** the support web (17) together with the clamping plate (15) and the receiving plate (16) defines at least one, in particular closed, cavity (30) and/or that the support web (17) is made of a metal material which has a specific thermal conductivity of less than 30 W/mK, in particular less than 20 W/mK, and/or a coefficient of thermal expansion of less than 16/1000000 [1/K], in particular less than 14/1000000 [1/K].

4. Workpiece pallet (7) according to claim 3, **characterized in that** at least one insulating material (48) from the group: gas, liquid, solid, is accommodated in the cavity (30) and/or that the cavity (30) is evacuated.

5. Workpiece pallet (7) according to claim 3 or 4, **characterized in that** a compensating valve (14) is attached to the clamping plate (15) or to the receiving plate (16) or to the supporting web (17), which compensating valve (14) is designed for a predeterminable, fluidically communicating connection between the cavity (30) and an environment of the workpiece pallet (7) for limiting a differential pressure between the cavity (30) and the environment.

6. Workpiece pallet (7) according to one of the preceding claims, **characterized in that** the supporting web (17) is formed in one piece with the receiving plate (16) and projects from a lower surface (22) of the receiving plate (16) facing the clamping plate (15) in the direction of the clamping plate (15) and is fixed with fasteners to an upper surface (21) of the clamping plate (15) facing the receiving plate (16).

7. Workpiece pallet (7) according to claim 6, **characterized in that** the supporting web (17) is designed as a circular ring which extends along a spacing axis (11) between the clamping plate (15) and the receiving plate (16) and has a fastening region which is designed as an annular collar (44) extending in the radial direction and which is penetrated by the fasteners which are arranged on the upper surface (21) of the clamping plate (15).

8. Workpiece pallet (7) according to claim 6 or 7, **characterized in that** a support ring (31) is arranged in the connecting gap (18) coaxially to the support web (17), which support ring (31) is connected to the upper surface (21) of the clamping plate (15) and to the lower surface (22) of the receiving plate (16), in particular in a sealing manner.

9. Workpiece pallet (7) according to one of the preceding claims, **characterized in that** the first interface comprises at least two locking pins (62, 63) which project from an lower surface (20) of the clamping plate (15), which forms a reference plane, the at least two locking pins (62, 63) facing away from the receiving plate (16), wherein longitudinal axes of the at least two locking pins (62, 63) are aligned parallel to one another and transversely to the reference plane and determine a mounting direction for the receiving plate (16), the at least two locking pins (62, 63) each having at least one undercut (64) relative to the longitudinal axes.

10. Workpiece pallet (7) according to claim 9, **characterized in that** an electromechanical plug connector (54) is arranged on the lower surface (20) of the clamping plate (15), which is designed for a plug connection with a plug-in movement aligned parallel to the assembly direction and for an electrical coupling between a plug-in receptacle (74) arranged on a machining table of a processing machine (1) and at least one electrical consumer (37) associated with the workpiece pallet (7) and/or at least one sensor (50) associated with the workpiece pallet (7).

11. Workpiece pallet (7) according to claim 10, **characterized in that** the plug connector (54) is received at least partially in a recess (58) of the clamping plate (15), the recess (58) being bordered at least partially by the supporting web (17).

12. Workpiece pallet (7) according to one of the preceding claims, **characterized in that** a first material thickness (25) of the clamping plate (15) differs from a second material thickness (26) of the receiving plate (16) by an amount of less than 30 percent, preferably by an amount of less than 20 percent, in particular by an amount of less than 10 percent.

13. Machining system (1) for machining workpieces, with a workpiece pallet (7) according to one of the preceding claims and with a processing machine comprising a machine bed (2), a machining table (4) mounted on the machine bed (2) and an application head (5) arranged on the machine bed (2), wherein an adjusting system for a relative movement between the machining table (4) and the application head (5) is associated with the machine bed (2), wherein the application head (5) is designed for delivering a particle stream of metallic particles in the direction of the machining table (4), wherein the machining (4) table has an interface receptacle (67, 68) for receiving and fixing locking pins (62, 63) and a plug-in receptacle (74) for receiving the workpiece pallet (7).

14. Machining system (1) according to claim 13, **characterized in that** a removal head (6), in particular a milling head, for machining a workpiece (8) which can be fixed on the workpiece pallet (7), is associated with the machine bed (2), and wherein the adjusting system is constructed for a relative movement between the machining table (4) and the removal head (6) and/or wherein a heat chamber is provided in addition to the processing machine, which heat chamber is constructed for temporarily receiving the workpiece pallet (7) during a heating process.

15. Machining system according to claim 13 or 14, **characterized in that** in addition to the processing machine, a machining centre is provided which has at least one removal head (6), in particular a milling head, for machining a workpiece (8) which can be fixed on the workpiece pallet (7) and wherein a machining table (7) of the machining centre comprises an interface receptacle (67, 68) for receiving and fixing locking pins (62, 63) and a plug-in receptacle for receiving the workpiece pallet (7) according to one of the claims 1 to 12.

## Revendications

1. Palette (7) de pièces à usiner destinée à être utilisée pour un usinage additif et soustractif de pièces à usiner, avec une plaque de serrage (15), qui comprend une première interface (20) qui est réalisée pour être fixée par complémentarité de forme sur une table d'usinage (4) d'une machine d'usinage (1), avec une plaque de réception (16) pour fixer une pièce à usiner (8), qui comprend une deuxième interface (23) pour fixer une pièce à usiner (8), dans laquelle la plaque de serrage (15) et la plaque de réception (16) sont disposées de manière espacée l'une par rapport à l'autre et dans laquelle, dans une fente de liaison (18) entre une face supérieure (21) de la plaque de serrage (15) et une face inférieure (22) de la plaque de réception (16), une barre de support (17) est disposée qui est reliée à la face supérieure (21) de la plaque de serrage (15) et à la face inférieure (22) de la plaque de réception (16), dans laquelle la barre de support (17) présente une surface de section transversale dans un plan de section transversale orienté parallèlement à la face inférieure de la plaque de réception (16), qui est inférieure à 15 %, de manière préférée est inférieure à 10 %, de manière particulièrement préférée est inférieure à 5 %, en particulier est inférieure à 1 %, d'une surface de la face inférieure de la plaque de réception (16), **caractérisée en ce qu'**est associé à la plaque de réception (16) au moins un dispositif de chauffage (37), qui est réalisé pour thermoréguler la plaque de réception (16).

2. Palette (7) de pièces à usiner selon la revendication 1, **caractérisée en ce que** la plaque de serrage (15) est fabriquée à partir d'un premier matériau métallique avec un premier coefficient de dilatation thermique et que la plaque de réception (16) est fabriquée à partir d'un deuxième matériau métallique avec un deuxième coefficient de dilatation thermique, dans laquelle le premier coefficient de dilatation thermique est supérieur au deuxième coefficient de dilatation thermique et dans laquelle le deuxième coefficient de dilatation thermique est inférieur à 16/1000000 [1/K].

3. Palette (7) de pièces à usiner selon la revendication 1 ou 2, **caractérisée en ce que** la barre de support (17), conjointement avec la plaque de serrage (15) et la plaque de réception (16), délimite au moins une cavité (30), en particulier fermée, et/ou que la barre de support (17) est fabriquée à partir d'un matériau métallique, qui présente une conductivité thermique spécifique inférieure à 30 W/mK, en particulier inférieure à 20 W/mK, et/ou un coefficient de dilatation thermique inférieur à 16/1000000 [1/K], en particulier inférieur à 14/1000000 [1/K].

4. Palette (7) de pièces à usiner selon la revendication 3, **caractérisée en ce qu'**est logé dans la cavité (30) au moins un matériau isolant (48) issu du groupe : gaz, liquide, solide, et/ou que la cavité (30) est mise sous vide.

5. Palette (7) de pièces à usiner selon la revendication 3 ou 4, **caractérisée en ce qu'**une vanne d'équilibrage (14) est installée sur la plaque de serrage (15) ou sur la plaque de réception (16) ou sur la barre de support (17), qui est réalisée pour une liaison prédéterminée, en communication fluidique entre la cavité (30) et un environnement de la palette (7) de pièces à usiner pour limiter une pression différentielle entre la cavité (30) et l'environnement.

6. Palette (7) de pièces à usiner selon l'une quelconque des revendications précédentes, **caractérisée en ce que** la barre de support (17) est réalisée d'une seule pièce avec la plaque de fixation (16) et dépasse d'une face inférieure (22) de la plaque de réception (16) tournée vers la plaque de serrage (15) en direction de la plaque de serrage (15) et est fixée par des moyens de fixation sur une face supérieure (21) de la plaque de serrage (15) tournée vers la plaque de réception (16).

7. Palette (7) de pièces à usiner selon la revendication 6, **caractérisée en ce que** la barre de support (17) est réalisée comme un anneau circulaire qui s'étend le long d'un axe d'écartement (11) entre la plaque de serrage (15) et la plaque de réception (16) et qui présente une zone de fixation qui est réalisée comme une collerette annulaire (44) s'étendant dans la direction radiale, en particulier vers l'extérieur, et qui est traversée par les moyens de fixation disposés sur la face supérieure (21) de la plaque de serrage (15).

8. Palette (7) de pièces à usiner selon la revendication 6 ou 7, **caractérisée en ce qu'**une bague support (31) est disposée dans la fente de liaison (18) coaxialement à la barre de support (17), laquelle est reliée à la face supérieure de la plaque de serrage (15) et à la face inférieure de la plaque de réception (16), en particulier de manière étanche.

9. Palette (7) de pièces à usiner selon l'une quelconque des revendications précédentes, **caractérisée en ce que** la première interface comprend au moins deux tenons de verrouillage (62, 63), qui dépassent d'une face inférieure (20) de la plaque de serrage (15) formant un plan de référence, opposée à la plaque de réception (16), et dont les axes longitudinaux orientés parallèlement les uns aux autres et transversalement au plan de référence définissent une direction de montage pour la plaque de réception (16), dans laquelle les au moins deux tenons de verrouillage (62, 63) présentent respectivement par rapport aux axes longitudinaux au moins une contre-dépouille (64).

10. Palette (7) de pièces à usiner selon la revendication 9, **caractérisée en ce qu'**un connecteur électromécanique (54) est disposé sur la face inférieure (20) de la plaque de serrage (15), lequel est réalisé pour une connexion enfichable avec un mouvement d'enfichage orienté parallèlement à la direction de montage et pour un couplage électrique entre un logement enfichable (74) disposé sur une table d'usinage (4) d'une machine d'usinage (1) et au moins un consommateur électrique (37) associé à la palette (7) de pièces à usiner et/ou au moins un dispositif de capteur (50) associé à la palette (7) de pièces à usiner.

11. Palette (7) de pièces à usiner selon la revendication 10, **caractérisée en ce que** le connecteur (54) est logé au moins par endroits dans un évidement (58) de la plaque de serrage (15), dans laquelle l'évidement (58) est bordé par endroits par la barre de support (17).

12. Palette (7) de pièces à usiner selon l'une quelconque des revendications précédentes, **caractérisée en ce qu'**une première épaisseur de matériau (25) de la plaque de serrage (15) diffère d'une quantité inférieure à 30 %, de préférence inférieure à 20 %, en particulier inférieure à 10 %, d'une deuxième épaisseur de matériau (26) de la plaque de réception (16).

13. Système d'usinage (1) pour l'usinage de pièces à usiner, avec une palette (7) de pièces à usiner selon l'une quelconque des revendications précédentes ainsi qu'avec une machine d'usinage, qui comprend un lit de machine (2), une table d'usinage (4) installée sur le lit de machine (2) ainsi qu'une tête d'application (5) disposée sur le lit de machine (2), dans lequel un dispositif de réglage pour un mouvement relatif entre la table d'usinage (4) et la tête d'application (5) est associé au lit de machine (2), dans lequel la tête d'application (5) est réalisée pour une distribution d'un flux de particules métalliques en direction de la table d'usinage (4), dans lequel la table d'usinage (4) présente un logement d'interface (67, 68) pour recevoir et fixer des tenons de verrouillage (62, 63) et un logement enfichable (74) pour recevoir la palette (7) de pièces à usiner pouvant être fixée sur la table d'usinage (4).

14. Système d'usinage (1) selon la revendication 13, **caractérisé en ce qu'**est associée au lit de machine (2) une tête d'enlèvement de matière (6) pour l'usinage par enlèvement de copeaux d'une pièce à usiner (8) pouvant être fixée sur la palette (7) de pièces à usiner, en particulier une tête de fraisage, et que le dispositif de réglage est réalisé pour un mouvement relatif entre la table d'usinage (4) et la tête d'enlèvement de matière (6) et/ou en qu'en plus de la machine d'usinage, une chambre thermique est prévue qui est réalisée pour recevoir temporairement la palette (7) de pièces à usiner pendant un processus de chauffage.

15. Système d'usinage (1) selon la revendication 13 ou 14, **caractérisé en ce qu'**en plus de la machine d'usinage, un centre d'usinage est prévu, lequel comprend au moins une tête d'enlèvement de matière (6) pour l'usinage par enlèvement de copeaux d'une pièce à usiner (8) pouvant être fixée sur la palette (7) de pièces à usiner, en particulier une tête de fraisage, et qu'une table d'usinage (4) du centre d'usinage comprend un logement d'interface (67, 68) pour recevoir et fixer des tenons de verrouillage (62, 63) et un logement enfichable (74) pour recevoir une palette (7) de pièces à usiner pouvant être fixée sur la table d'usinage (4) selon l'une quelconque des revendications 1 à 13.
